Europäisches Patentamt

European Patent Office

Office européen des brevets

(11) Numéro de publication : **0 281 476 B1**

## (12) FASCICULE DE BREVET EUROPEEN

(45) Date de publication du fascicule du brevet :
**13.05.92 Bulletin 92/20**

(51) Int. Cl.$^5$ : **C09D 1/00,** C09D 133/08,
C09D 133/10

(21) Numéro de dépôt : **88400481.3**

(22) Date de dépôt : **01.03.88**

(54) **Enduit de protection à effet isothermique et isophonique.**

Le dossier contient des informations techniques présentées postérieurement au dépôt de la demande et ne figurant pas dans leprésent fascicule.

(30) Priorité : **03.03.87 FR 8702831**

(43) Date de publication de la demande :
**07.09.88 Bulletin 88/36**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**FR-A- 2 582 297
US-A- 4 390 372
Mémoires de fin d'études 1988 "Formulatin de produits d'isolation pre priomètrie ultrasono-re" PFE No. 73, Bechaz B., DevauxP., Ecole Nationale Supérieure d'Arts et Métiers 75013 Paris**

(73) Titulaire : **Kleinfelden, Jean
28, avenue Suffren
F-75015 Paris (FR)**

(72) Inventeur : **Kleinfelden, Jean
28, avenue Suffren
F-75015 Paris (FR)**

(74) Mandataire : **Jolly, Jean-Pierre et al
Cabinet Jolly 54, rue de Clichy
F-75009 Paris (FR)**

## Description

La présente invention concerne un enduit de protection à effet isothermique et isophonique. Elle a plus particulièrement pour objet un enduit de ce type constitué d'une composition durcissable à deux composants, l'un liquide, l'autre solide, que l'on mélange au moment de l'emploi et que l'on applique sur la surface à protéger.

De telles compositions sont bien connues dans la technique et elles sont utilisées sur des supports de types variés, sur lesquels on les applique habituellement à l'aide d'une machine à projeter, qui effectue en même temps le mélange des deux composants.

Ces compositions ont de nombreuses applications, et on les utilise aussi bien dans le bâtiment, comme enduits de revêtement intérieur ou extérieur (enduits dits "mixtes"), que sur des machines, des chaudières ou des pots d'échappement, où les enduits sont soumis à des températures élevées, à des vibrations et à des tensions diverses (voir FR-A-2 582 297).

Dans ces conditions astreignantes d'utilisation, l'adhérence des enduits existants se révèle souvent insuffisante. Par ailleurs, ils résistent mal aux agents extérieurs agressifs et présentent fréquemment des micro-fissures en surface. Enfin, une décohésion de leurs constituants a tendance à se manifester dans un délai relativement bref.

La présente invention vise à remédier à ces inconvénients et, plus particulièrement, à renforcer la cohésion des enduits réalisés avec de telles compositions à deux constituants.

L'invention vise également à proposer un enduit de ce type dont les caractéristiques de prise et de durcissement soient proches de celles d'une matière plastique en cours de polymérisation et qui n'en présente pas moins des caractéristiques de dureté et de résistance mécanique comparables à celles d'un liant hydraulique classique tel que le plâtre.

L'invention a enfin pour but de proposer un enduit de ce type qui, sous une épaisseur environ deux fois moindre que des isolants thermiques usuels, assure une protection comparable à celle de ces isolants.

A cet effet, l'invention a pour objet un enduit de protection à deux composants, l'un solide et l'autre liquide, que l'on mélange au moment de l'emploi, le composant solide comprenant, en % en poids, de 20 à 60 % d'un liant hydraulique choisi dans le groupe constitué par le plâtre, le ciment et la bentonite calcique gonflante, de 10 à 40 % en poids d'un produit ramifié choisi dans le groupe constitué par les sciures de bois et les scories métallurgiques broyées, et de 2 à 10 % de mica naturel micronisé, tandis que le composant liquide comprend, en dispersion dans l'eau, une résine d'un copolymère vinylacrylique à pH basique, en une quantité représentant de 30 à 50 % en poids du composant, et un plastifiant approprié, le mélange du composant liquide et du composant solide étant réalisé de façon à ce que le composant liquide représente de 80 à 100 % en poids du composant solide, cet enduit étant caractérisé en ce que le composant solide comprend de 10 à 40 % en poids d'un produit ramifié choisi dans le groupe constitué par les sciures de bois d'une dimension maximum de 10 μm et les scories métalliques broyées d'une dimension maximum de 10 à 50 μm et, de préférence de l'ordre de 10 μm.

De préférence, ainsi qu'il ressortira des essais décrits dans la suite de la présente description, la résine d'un copolymère acrylique à pH basique représentera environ 40 % en poids du composant liquide et le rapport pondéral du composant liquide et du composant solide sera de l'ordre de 0,9.

Une caractéristique essentielle de l'enduit de protection conforme à l'invention réside donc dans la présence dans le composant solide de deux produits nouveaux, d'une part, le produit ramifié, qui peut être soit une fine de bois, soit une scorie métallique broyée, d'autre part, le mica naturel micronisé.

Le premier de ces produits a pour but de modifier les propriétés rhéologiques de l'enduit lorsque que l'on mélange le composant liquide et le composant solide. En effet, les Demandeurs ont établi que les branches orientées des produits ramifiés agissent comme autant de centres de germination pour les liants hydrauliques, lors du durcissement de la résine vinylacrylique, et confèrent ainsi au produit solide des caractéristiques optimales d'homogénéité, de cohésion et d'isomérisation. On notera que les fines de bois et les scories métalliques sont des sous-produits de récupération et qu'il sont donc très peu coûteux.

Le second constituant du composant solide de l'enduit, à savoir le mica naturel micronisé, vise à provoquer une stratification interne de l'enduit, apte à réfléchir les radiations ultra-violettes et infrarouges et à accroître ainsi les propriétés d'isolation thermique de l'enduit.

Avantageusement, le constituant solide contiendra, en outre, de la silice électrofondue obtenue à partir de sable très pur, dite "verre de quartz", de l'oxyde de magnésium ou de calcium, du silicate de calcium (par exemple, le minéral dénommé wollastonite), de l'alumine expansée et/ou du borate de calcium purifié à partir de colemanite, ces composés ayant pour but de conférer à l'ensemble du produit une grande résistance au feu, une plus grande cohésion, ainsi qu'une résistance accrue aux produits chimiques agressifs et agents atmosphériques.

En vue d'accroître les qualités isophoniques de l'enduit, il sera judicieux d'accroître son poids spécifique et, dans ce but, on incorporera avantageusement au composant solide une charge lourde telle que le sulfate de baryum, qui arrête les fréquences basses comprises entre 100 et 500 Hz.

Par contre, si l'on désire améliorer les propriétés isothermiques de l'enduit, il faudra alléger le composant solide, puisque le coefficient de conductibilité thermique est proportionnel à la masse spécifique. Dans ce but, on incorporera avantageusement dans le composant solide des billes creuses d'alumine ou autres d'une dimension de 0,5 à 5 mm. Dans le même but, on pourra incorporer dans le composant liquide un rétenteur d'air, tel que le lauryl éther sulfate, apte à retenir de l'air occlus dans l'enduit,

Le composant liquide de l'enduit comprendra une résine d'un copolymère vinylacrylique tel que le RHOPLEX®, MC 76 en dispersion dans de l'eau, ainsi qu'un plastifiant approprié. Cette résine aura un pH basique, afin de ne pas réagir avec le liant hydraulique du constituant solide et, de préférence un pH d'au moins 9,5. Le plastifiant sera, par exemple, de l'éthylène glycol. Un fongicide compatible avec les autres constituants, par exemple de la 2n octyl-4 isothiazoline 3,1, pourra avantageusement être présent dans le composant liquide.

Une composition $C_1$ d'enduit conforme à l'invention est donnée ci-après, en % en poids, à titre d'exemple non limitatif :

| Composant liquide | % en poids |
|---|---|
| - Copolymère acrylique (Rhoplex® MC76) | 40 |
| - 2n octyl-4 isothiazoline 3,1 | 0,5 |
| - Ethylène glycol | 1 |
| - Lauryl éther sulfate | 2 |
| - Eau | 56,5 |

| Composant solide | |
|---|---|
| - Plâtre | 45 |
| - Mica micronisé (dimension maximum 0,5 à 5 mm) | 5 |
| - Borate de calcium (Portabor® A 38)* | 2,7 |
| - Silicate de calcium (Casiflux® MA38)* | 2,4 |
| - Silicate d'alumine (Portaphyl® C180)* | 10 |
| - Silice électrofondue | 5 |
| - Olia Roc*® (laine de roche) | 20 |
| - Cecaperl® 10* (roche volcanique vitreuse et expansée de 0,5 à 5 mm) | 10 |
| - Retardateur de prise R 6031*® | 0,20 |

* Marques déposées ou appellations commerciales.

Au moment de l'emploi, on mélange environ 18 litres. du composant liquide et environ 20 Kg de composant solide, soit un rapport liquide/solide d'environ 0,9.

Il est impératif de verser lentement la poudre solide dans le composant liquide pendant une durée de 2 à 3 minutes, en agitant rigoureusement le mélange, pour assurer une excellente homogénéité et favoriser l'introduction d'air dans le mélange.

L'application sur un support se fait à l'aide d'une machine à projeter, qui, dans la pratique, assure simultanément le mélange des phases liquide et solide.

La prise d'un tel enduit de la composition $C_1$ ci-dessus a été étudiée à l'aide d'un transducteur ultra-sonore de type piézo-électrique en appliquant le processus suivant:

un générateur ultrasonore émet des ondes de 20 000 Hz dans une sonde plongée dans le mélange à tester et l'on enregistre les échos de second ordre reçus par la sonde.

Les résultats obtenus sont illustrés par les dessins annexés sur lesquels:

La figure 1 est une courbe illustrant l'amplitude des échos enregistrés (exprimée en volt/cm) fonction du temps, avec la composition d'enduit conforme à l'invention;

La figure 2 est une courbe analogue relative à la prise, enregistrée dans des conditions analogues, d'un plâtre commercialisé sous l'appellation plâtre à mouler;

Comme on le voit sur les dessins, les deux courbes comportent d'abord, pour une courte période, une partie fortement inclinée, suivie d'une partie peu inclinée de pente $\alpha$, (durée totale de ces deux parties: $T_1$). On relève ensuite une partie plus inclinée, pseudo-linéaire, qui se termine au temps $T_2$, suivie d'une partie asymptotique.

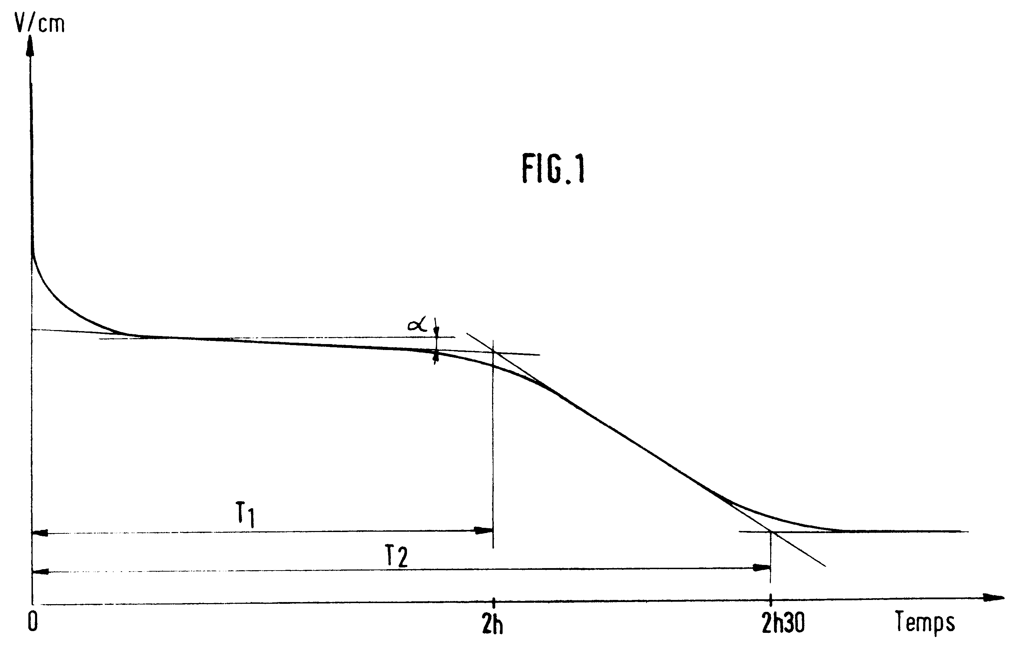

Dans le cas de l'enduit selon l'invention (Figure 1), on obtient une courbe parfaitement régulière, caractéristique d'une matière plastique en cours de polymérisation, même pendant la période $T_1$ correspondant à la germination des hydrates du liant hydraulique qui, grâce à la présence d'un produit ramifié se développent simultanément en de multiples points. Pendant la période séparant les instants $T_1$ et $T_2$, qui correspond à la prise de l'enduit, on constate à nouveau que la courbe est parfaitement régulière, puisque la croissance des cristaux du liant s'accompagne de la polymérisation de la résine acrylique. Enfin, la partie asymptotique qui suit l'instant $T_2$ correspond au durcissement de l'enduit.

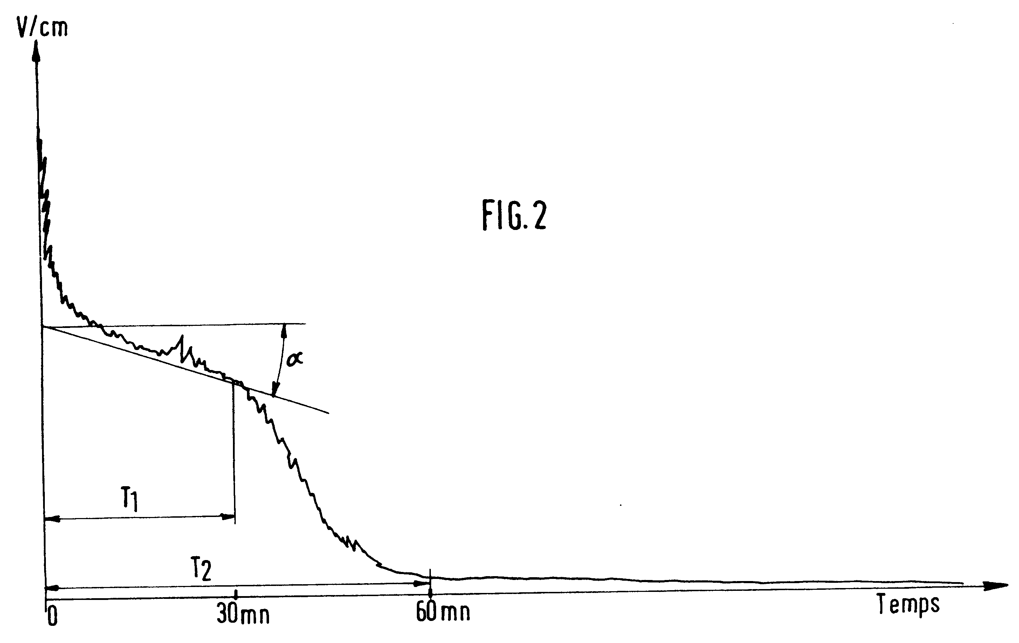

Dans le cas du plâtre du commerce (Figure 2), on constate que la courbe est extrêmement irrégulière et présente de très nombreux pics.

En effet, un liant hydraulique tel que le plâtre ou le circuit est un système chimique de constituants anhydres, instables en présence d'eau, et d'adjuvants éventuels, non hydrauliques, mais non inertes. Dès la mise en contact de l'eau et du liant, il se forme une pâte dont les caractéristiques rhéologiques sont complexes. Ce milieu est alors le siège de réactions physico-chimiques thermiques et mécaniques, dont l'évolution extrêmement rapide modifie sensiblement les propriétés initiales. C'est à cette période de réaction que l'on doit d'observer la différence avec le produit faisant l'objet de l'invention.

Sur la figure 2, on retrouve une première partie (durée $T_1$) qui correspond à la germination, à la ségrégation et à la redissolution éventuelle des cristaux. A partir de l'instant $T_1$, qui est d'ailleurs difficile à déterminer avec précision, la croissance des cristaux continue à s'accompagner de très nombreuses irrégularités, traduisant une hétérogénéité locale marquée. Enfin, après l'instant $T_2$, on retrouve une zone asymptotique correspondant au durcissement du plâtre.

On sait que, pour obtenir une parfaite cohésion de l'enduit, résultant d'une prise lente, il est nécessaire que la durée totale de prise $T_2$ soit aussi élevée que possible, avec un angle $\alpha$ d'inclinaison de la courbe, pendant cette période, aussi petit que possible. Pour que le durcissement intervienne rapidement après le débit de la prise proprement dite (instant $T_1$), il est aussi souhaitable que $T_2-T_1$ soit le plus faible possible.

On constate que, dans le cas de l'enduit de l'invention, la durée $T_2$ est de l'ordre de 2 heures et 30 minutes, contre une heure pour le plâtre du commerce, et que l'angle $\alpha$ est beaucoup moins marqué pour l'enduit selon l'invention. On constate également que la durée $T_2-T_1$ est de 30 minutes dans les deux cas.

En vue de déterminer les quantités relatives optimum de résine acrylique et d'eau du composant liquide et les proportions optimum du composant liquide et du composant solide, divers essais ont été effectués avec l'enduit de composition $C_1$ mentionné ci-dessus. Pour chacun d'entre eux on a relevé les valeurs de $T_1$, $T_2$ et $\alpha$.

Les résultats obtenus sont rassemblés dans le Tableau ci-après où r désigne la masse de résine utilisée, P1 la masse du composant liquide et Ps la masse du composé solide.

EP 0 281 476 B1

| $\frac{Pl}{Ps}$ \ $\frac{r}{Pl}$ (en %) | 25 | 30 | 35 | 40 | 45 | 50 |
|---|---|---|---|---|---|---|
| 0,71 | | | Essai n°6<br>$T_1$ = 37 mn<br>$T_2$ = 1h30mn<br>$\alpha$ = 0,05 | | | Essai n° 7<br>$T_1$ = 36 mn<br>$T_2$ = 1h30mn<br>$\alpha$ = 0,23 |
| 0,8 | | Essai n° 4<br>$T_1$ = 58 mn<br>$T_2$ = 1h40 mn<br>$\alpha$ = 0,12 | | Essai n° 1<br>$T_1$ = 1h10 mn<br>$T_2$ = 2 h<br>$\alpha$ = 0,14 | Essai n° 3<br>$T_1$ = 1h 14 mn<br>$T_2$ = 2 h<br>$\alpha$ = 0,121 | Essai n° 8<br>$T_1$ = 1h23mn<br>$T_2$ = 2 h8 mn<br>$\alpha$ = 0,068 |
| 0,89 | Essai n° 12<br>$T_1$ = 1h20 mn<br>$T_2$ = 2h02mn<br>$\alpha$ = 0,015 | Essai n° 9<br>$T_1$ = 1h53mn<br>$T_2$ = 2h25mn<br>$\alpha$ = 0,12 | Essai n° 10<br>$T_1$ = 1h38mn<br>$T_2$ = 2h23mn<br>$\alpha$ = 0,04 | Essai N° 2<br>$T_1$ = 2 h<br>$T_2$ = 2h25mn<br>$\alpha$ = 0,076 | | Essai n° 5<br>$T_1$ = 1h35 mn<br>$T_2$ = 2h33mn<br>$\alpha$ = 0,04 |
| 1 | | Essai n° 11<br>$T_1$ = 1h 43mn<br>$T_2$ = 2h43 mn<br>$\alpha$ = 0,048 | | | | |

On constate que, dans le cas de la composition d'enduit conforme à l'invention, les meilleurs résultats ($T_1$ = 2h, $T_2 - T_1$ = 25 mm, $\alpha$ = 0076) sont obtenus lorsque la résine représente 40% en poids du composant liquide et que le rapport $\frac{P1}{Ps}$ est égal à 0,89. On constate également que l'on obtient des résultats satisfaisants lorsque $\frac{r}{P1}$ est compris entre 30 et 50% en poids et avec un rapport $\frac{P1}{Ps}$ compris entre 0,8 et 1.

Des essais comparatifs ont été effectués en vue de tester les propriétés d'isolation thermique de cette composition.

Dans ce but, on a maintenu à l'aide de radiateurs électriques une température constante de 27°C dans une enceinte parallélépipédique dont le soubassement, le plafond et trois parois latérales étaient constitués d'un matelas de laine de verre d'une épaisseur de 5 cm, tandis que la quatrième paroi latérale était constituée, d'une tôle ondulée d'une épaisseur de 2,5 mm, soit nue, soit gainée intérieurement de divers matériaux isolants. La température à l'extérieur de l'enceinte étant de 1°C, on a mesuré la température de peau de la surface externe de la tôle ondulée.

Les résultats suivants ont été obtenus.

```
- tôle nue:                                    26°C,
- tôle gainée intérieurement d'un
  matelas de laine de verre de
  50 mm:                                       22°C,
- tôle gainée intérieurement d'un
  revêtement de 5 mm de l'enduit
  conforme à l'invention:                      22°C,
- tôle gainée intérieurement de
  50 mm  de polystyrène expansé:               19°C,
- tôle gainée intérieurement de
  40 mm de polystyrène expansé:                22°C.
```

On constate donc qu'avec une épaisseur 10 fois moindre de l'enduit selon l'invention, on obtient le même effet d'isolation thermique qu'avec une épaisseur de laine de verre de 50 mm. Avec 5 mm de l'enduit selon l'invention, on obtient en outre un résultat analogue à celui obtenu avec 40 mm de polystyrène.

Ces essais font donc ressortir clairement les propriétés remarquables d'isolation thermique de l'enduit conforme à l'invention.

Cet enduit présente, en outre, un vieillissement comparable à celui du béton et une excellente adhérence à des supports de tout type (bois, pierre, métal, plastique, etc...).

il convient donc particulièrement bien à l'isolation thermique et phonique de murs ou d'autres parois, à l'isolation thermique et acoustique de gaines de ventilation ou d'évacuation de fumées. Il s'applique, en outre, particulièrement bien à l'isolation thermique des cuves industrielles.

## Revendications

1. Enduit de protection à deux composants, l'un solide et l'autre liquide, que l'on mélange au moment de l'emploi, le composant solide comprenant, en % en poids, de 20 à 60 % d'un liant hydraulique choisi dans le groupe constitué par le plâtre, le ciment et la bentonite calcique gonflante, de 10 à 40 % en poids d'un produit ramifié choisi dans le groupe constitué par les sciures de bois et les scories métallurgiques broyées, et de 2 à 10 % de mica naturel micronisé, tandis que le composant liquide comprend, en dispersion dans l'eau, une résine d'un copolymère vinylacrylique à pH basique, en une quantité représentant de 30 à 50 % en poids du composant, et un plastifiant approprié, le mélange du composant liquide et du composant solide étant réalisé de façon à ce que le composant liquide représente de 80 à 100 % en poids du composant solide, cet enduit étant caractérisé en ce que le composant solide comprend de 10 à 40 % en poids d'un produit ramifié choisi dans le groupe constitué par les sciures de bois d'une dimension maximum de 10 µm et les scories métalliques broyées d'une dimension maximum de 10 à 50 µm et, de préférence de l'ordre de 10 µm.

2. Enduit selon la revendication 1, caractérisé en ce que ladite résine d'un copolymère vinylacrylique représente environ 40 % en poids du composant liquide.

3. Enduit selon l'une des revendications 1 et 2, caractérisé en ce que le pH de ladite résine d'un copolymère vinylacrylique est d'au moins 9,5.

4. Enduit selon l'une des revendications 1 à 3, caractérisé en ce que le rapport de la masse du composant liquide et de la masse du composant solide est d'environ 0,9.

5. Enduit selon l'une des revendications 1 à 4, caractérisé en ce que la phase liquide contient une charge légère constituée par des billes creuses d'alumine d'une dimension maximum de 0,5 à 5 mm de diamètre.

6. Enduit selon l'une des revendications 1 à 5, caractérisé en ce que la phase liquide contient un rétenteur d'air.

7. Enduit selon l'une des revendications 1 à 6, caractérisé en ce que la phase solide contient une charge lourde constituée par du sulfate de baryum.

## Patentansprüche

1. Schutzlack aus zwei Komponenten, wobei die eine fest und die andere flüssig ist, und die zum Zeitpunkt der Verarbeitung gemischt werden, wobei die feste Komponente (in Gew.-%) zu 20 bis 60 % ein hydraulisches Bindemittel enthält, das aus einer Gruppe ausgewählt ist, die aus Gips, Zement und gequollenem Kalk Bentonit besteht, zu 10 bis 40 Gew.-% aus einem verzweigten Erzeugnis, das aus einer Gruppe ausgewählt ist, die aus Holzsägespänen und zerkleinerten metallurgischen Schlacken besteht, und zu 2 bis 10 % aus natürlichem, zerkleinertem Glimmer, während die flüssige Komponente, in einer Dispersion in Wasser, einen Harz von einem vinylacryl-Copolymer von basischem pH enthält, in einer Menge, die 30 bis 50 Gew.-% der Komponente entspricht, und einem entsprechenden Weichmacher, wobei das aus der flüssigen und der festen Komponente bestehende Gemisch derart realisiert wird, daß die flüssige Komponente 80 bis 100 Gew.-% der festen Komponente darstellt, wobei dieser Oberzug dadurch gekennzeichnet ist, daß die feste Komponente 10 bis 40 Gew.-% eines verzweigten Erzeugnisses enthält, das aus einer Gruppe ausgewählt ist, die aus Holzsägespänen mit einer maximalen Größe von 10 µm, zerkleinerten metallurgischen Schlacken mit einer maximalen Größe von 10 bis 50 µm und vorteilhafterweise in der Größenordnung von 10 µm besteht.

2. Lack gemäß Anspruch 1, dadurch gekennzeichnet, daß besagter Harz eines vinyl-acryl Copolymer ca. 40 Gew.-% der flüssigen Komponente repräsentiert.

3. Lack gemäß einem der Ansprüche 1 und 2, dadurch gekennzeichnet, daß der pH-Wert des besagten Harzes eines vinyl-acryl Copolymer mindestens 9,5 beträgt.

4. Lack gemäß einem der Ansprüche 1 bis 3, dadurch gekennzeichnet, daß das Verhältnis der Masse der flüssigen Komponente und der Masse der festen Komponente durchschnittlich 0,9 beträgt.

5. Lack gemäß einem der Ansprüche 1 bis 4, dadurch gekennzeichnet, daß die flüssige Phase eine leichte Ladung aufweist, die aus hohlen Aluminiumkugeln mit einer maximalen Größe von 0,5 bis 5 mm Durchmesser besteht.

6. Lack gemäß einem der Ansprüche 1 bis 5, dadurch gekennzeichnet, daß die flüsige Phase ein Mittel mit Luft-rückhaltenden Eigenschaften enthält.

7. Lack gemäß einem der Ansprüche 1 bis 6, dadurch gekennzeichnet, daß die feste Phase eine schwere Ladung aufweist, die sich aus Barium-Sulfat zusammensetzt.

## Claims

1. A protective coating with two components, one solid and the other liquid, which are mixed at the moment of use, the solid component comprising, in percentage by weight, from 20 to 60 % of a hydraulic binder selected from the group consisting of plaster, cement and swelling, lime-containing bentonite, from 10 to 40 % by weight of a branched product selected from the group consisting of sawdust and crushed metallurgical slag, and from 2 to 10 % of micronized natural mica, while the liquid component comprises, in aqueous dispersion, a vinyl-acrylic copolymer resin of alkaline pH, in an amount representing from 30 to 50 % by weight of the component, and a suitable plasticizer, mixing of the liquid component and the solid component being effected in such a way that the liquid component represents from 80 to 100 % by weight of the solid component, this coating being characterized in that the solid component comprises from 10 to 40 % by weight of a branched product selected from the group consisting of sawdust of a maximum size of 10 µm and crushed metallic slag of a maximum size of from 10 to 50 µm, preferably of the order of 10 µm.

7

2. A coating according to claim 1, characterized in that said vinyl-acrylic copolymer resin represents approximately 40 % by weight of the liquid component.

3. A coating according to either one of claims 1 and 2, characterized in that the pH of said vinyl-acrylic copolymer resin is at least 9.5.

4. A coating according to any one of claims 1 to 3, characterized in that the ratio of the mass of the liquid component and the mass of the solid component is approximately 0.9.

5. A coating according to any one of claims 1 to 4, characterized in that the liquid phase contains a light filler consisting of hollow balls of aluminium of a maximum size of from 0.5 to 5 mm in diameter.

6. A coating according to any one of claims 1 to 5, characterized in that the liquid phase contains an air retainer.

7. A coating according to any one of claims 1 to 6, characterized in that the solid phase contains a heavy filler consisting of barium sulphate.

FIG.1

V/cm

α

T1

T2

0          2h          2h30          Temps

EP 0 281 476 B1

9

FIG.2

EP 0 281 476 B1